# EUROPÄISCHE PATENTANMELDUNG

(11) **EP 2 428 775 A1**
(43) Veröffentlichungstag der Anmeldung: **14.03.2012**
(21) Anmeldenummer: 10176010.6
(22) Anmeldetag: 09.09.2010
(51) Int. Cl.: G01D 5/244

(54) **Verfahren zur Überwachung von Drehgebern und Drehgeber**

(71) Anmelder: Johannes Hübner Fabrik elektrischer Maschinen, 35394 Giessen (DE)
(72) Erfinder: Wulkow, Dieter, 35583 Wetzlar (DE)
(74) Vertreter: Tappe, Hartmut

(57) **Zusammenfassung**

Die Erfindung betrifft ein Verfahren zur Überwachung von Drehgebern sowie einem Drehgeber zur Durchführung des Verfahrens, wobei das Verfahren mittels eines Drehgebers und einer Datenverarbeitungsanlage ausgeführt wird, wobei Drehgebersignale durch zumindest zwei Umdrehungen des Drehgebers gewonnen werden, wobei ein Vergleich der Drehgebersignale gleicher Drehgeberpositionen durchgeführt wird, und wobei ein Ergebnis des Vergleichs ausgegeben wird.

## Beschreibung

Die Erfindung betrifft ein Verfahren zur Überwachung von Drehgebern sowie einen Drehgeber, wobei das Verfahren mittels eines Drehgebers und einer Datenverarbeitungsanlage ausgeführt wird, und wobei Drehgebersignale durch zumindest zwei Umdrehungen des Drehgebers gewonnen werden.

Drehgeber sind aus dem Stand der Technik hinreichend bekannt und werden im Wesentlichen zur Position- und Drehzahlerfassung verwendet. Ein Drehgeber umfasst zumindest eine an eine Maschine koppelbare Welle mit einer optischen oder magnetischen Erfassungseinrichtung, welche für jede Umdrehung der Welle eine Vielzahl von Signalen gewinnen kann, um aus den Signalen eine Drehwinkellage der Welle bzw. eine Drehzahl bestimmen zu können. Drehgeber werden unter anderem auch in großen Maschinen oder Anlagen verwendet und sind im Betrieb großen Belastungen ausgesetzt. Da ein Schaden an einem Drehgeber den Ausfall einer ganzen Anlage zur Folge haben kann, beispielsweise eines Walzwerkes, ist es wünschenswert, den Eintritt des Schadens frühzeitig zu erkennen.

Da beispielsweise eine durchschnittliche Lebensdauer von Lagern des Drehgebers bekannt ist, ist es möglich, den Drehgeber in einem definierten Zeitabschnitt vor dem Ende der Lebensdauer der Lager kontrolliert auszutauschen. Um einen Verschleiß des Drehgebers in Bezug auf die angenommene Lebensdauer besser einschätzen zu können, werden beispielsweise Betriebsparameter, wie eine Gesamtumdrehungsanzahl, Betriebstemperaturen, sowie weitere, für die Lebensdauer relevante Faktoren während des Betriebs des Drehgebers ermittelt und daraus eine Ausfallwahrscheinlichkeit errechnet. Unter Einbeziehung eines Sicherheitsfaktors erfolgt dann die Ausgabe einer Meldung, welche zum rechtzeitigen Austausch des Drehgebers auffordert.

Eine weitere bekannte Methode einen bevorstehenden Ausfall bzw. einen vorliegenden Schaden eines Drehgebers festzustellen, ist die Ermittlung sogenannter Drehschwebungskurven. Dabei werden Drehgebersignale in Form einer Sinuskurve dargestellt, wobei aus möglichen Abweichungen von der Sinuskurve Drehschwingungen bzw. so genannte Drehschwebungen des Drehgebers ermittelt werden. Grundsätzlich ist jedoch eine Früherkennung eines beginnenden Lagerschadens auf Basis von Schwingungen zur Zeit nicht möglich bzw. von vielen Faktoren beeinflusst.

Nachteilig bei den bekannten Verfahren ist jedoch, dass diese nicht ausreichend zuverlässig sind. So ist es notwendig, Drehgeber bereits lange vor dem Eintritt eines möglichen Schadens auszuwechseln, um das Risiko eines Schadens im laufenden Betrieb möglichst gering zu halten. Andererseits können Drehgeber auch vor dem Erreichen der errechneten Lebensdauer ausfallen, da die aktuell eingesetzten Verfahren nicht die individuellen Betriebsbedingungen ausreichend berücksichtigen.

Auch können die festgestellten Drehschwingungen eine Reihe verschiedener anderer Ursachen haben, die nicht zum Ausfall des Drehgebers führen, wie z.B. durch eine Kupplung oder einen Anbaufehler des Drehgebers bewirkte Drehschwingungen, die eine Lebensdauer des Drehgebers nicht wesentlich beeinflussen. So kommt es möglicherweise zum Austausch eines Drehgebers, ohne dass dieser tatsächlich notwendig gewesen wäre. Ein vorzeitiger Austausch ist folglich mit erhöhten Kosten für den Betreiber der Maschine bzw. Anlage verbunden.

Der vorliegenden Erfindung liegt daher die Aufgabe zugrunde, ein Verfahren und einen Drehgeber zur Durchführung des Verfahrens vorzuschlagen, das bzw. der eine verbesserte Bestimmung eines möglichen Schadenszeitpunktes des Drehgebers ermöglicht.

Diese Aufgabe wird durch ein Verfahren mit den Merkmalen des Anspruchs 1 und einem Drehgeber mit den Merkmalen des Anspruchs 15 gelöst.

Das erfindungsgemäße Verfahren zur Überwachung von Drehgebern wird mittels eines Drehgebers und einer Datenverarbeitungsanlage ausgeführt, wobei Drehgebersignale durch zumindest zwei Umdrehungen des Drehgebers gewonnen werden, wobei ein Vergleich der Drehgebersignale gleicher Drehgeberpositionen durchgeführt wird, und wobei ein Ergebnis des Vergleichs ausgegeben wird.

Das erfindungsgemäße Verfahren sieht demnach einen Vergleich von zwei Umdrehungen des Drehgebers vor, wobei die zu vergleichenden Umdrehungen unmittelbar aufeinanderfolgend oder über einen Zeitraum von Jahren voneinander zeitlich beabstandet sein können. Aus einer aus dem Vergleich sich möglicherweise ergebenden Differenz lässt sich im Ergebnis auf eine Veränderung des Drehgebers schließen. Diese Veränderung ist ein Anzeichen bzw. ein Indiz für eine sich anbahnende oder bereits aufgetretene Schädigung des Drehgebers. Das Verfahren ermöglicht somit eine sehr viel genauere Analyse der Drehgebersignale und damit eine verlässlichere Bestimmung möglicher Schädigungen des Drehgebers. Ein Ausfallrisiko bzw. ein möglicher Ausfallzeitpunkt ist dann ebenfalls genauer ermittelbar, was eine Verlängerung der Gesamtbetriebsdauer des Drehgebers bis zu einem Austausch ermöglicht. Vorteilhaft kann eine Transformation der Drehgebersignale in zumindest zwei Datensätze erfolgen, wobei ein Vergleich der Datensätze für Daten gleicher Drehgeberpositionen erfolgen kann. Nach dem zumindest zwei Datensätze aus den gewonnenen Drehgebersignalen erzeugt wurden, können die Daten übereinstimmender bzw. gleicher Drehgeberpositionen hinsichtlich möglicher Übereinstimmungen oder Abweichungen verglichen werden.

Besonders vorteilhaft ist es, wenn ein Vergleich der Datensätze mit von in einer Datenbank gespeicherten Datensätzen erfolgt. Die Datenbank kann Datensätze enthalten, die spezifischen, häufig auftretenden Schädigungen zuzuordnen sind. Auch kann die Datenbank bzw. ein Datenspeicher die Drehgebersignale bzw. den Datensatz der ersten Umdrehung für den Vergleich speichern.

Folglich kann aus dem Vergleich eine spezifische Schädigung abgeleitet werden. So kann auf Basis der aktuell gewonnen Datensätze und deren Vergleich mit den in der Datenbank enthaltenen Daten ein Rückschluss auf ein bekanntes Schädigungsmuster, welches aktuell vorliegt, gezogen werden. So können besonders schnell Schädigungsmuster erkannt und einem möglichen Schaden zugeordnet werden.

Auch können die Datensätze Daten enthalten, die Frequenzwerte sowie zugehörige Amplitudenwerte innerhalb eines Frequenzwertebereiches für jeweils verschiedene Drehgeberpositionen repräsentieren. Das heißt, die Drehgebersignale einer Drehgeberumdrehung können in einen Datensatz transformiert werden, welcher drei Messgrößen beinhaltet, nämlich eine Schwingungsfrequenz, eine zugehörige Amplitude und eine Drehgeberposition bzw. Winkellage bezogen auf die Umdrehung. Dabei kann je gemessenem Drehgebersignal ein Frequenzwertebereich abgebildet bzw. einbezogen werden, der eine Vielzahl möglicher Frequenzen umfasst.

Weiter kann aus einer Größe eines Amplitudenwertes eines jeweiligen Frequenzwertes eine spezifische Schädigung abgeleitet werden. Die jeweilige Größe der Amplitudenwerte kann mit einer spezifischen Schädigung durch Vergleich in Verbindung gebracht werden, so dass mögliche Schädigungen noch genauer bestimmbar sind.

Zur Kompensation von Drehzahländerungen des Drehgebers während des Betriebs ist es vorteilhaft, wenn die Frequenzwerte jeweils als ein Vielfaches einer drehzahlabhängigen Grundfrequenz bestimmt werden. Damit sind die Frequenzwerte von einer Drehzahl unabhängig und somit besser vergleichbar. Dies ist jedoch nicht zwingend notwendig, wenn eine Drehzahl des Drehgebers im Wesentlichen konstant ist. Jedoch können so im Betrieb auftretende Drehzahlschwankungen und Änderungen kompensiert werden, bzw. unterschiedliche Drehgeber und deren Datensätze einfach verglichen werden.

Insbesondere kann ein Frequenzwertebereich von 8 bis 500 des Vielfachen der drehzahlabhängigen Grundfrequenz berücksichtigt werden. Eine Analyse dieses Frequenzwertebereichs kann unter anderem Hinweise auf Schädigungen sowie Anbaufehler und andere äußere Einflüsse hinsichtlich des untersuchten Drehgebers liefern.

Sollen alleine nur sich anbahnende Schäden am Drehgeber detektiert werden, kann vorteilhaft ein Frequenzwertebereich von 50 bis 500 des Vielfachen der drehzahlabhängigen Grundfrequenz berücksichtigt werden. Auch kann so sichergestellt werden, dass Schädigungen detektiert werden, die alleine dem Drehgeber zuzuordnen sind.

Eine Schädigung ist noch genauer bestimmbar, wenn eine Korrelation der Datensätze erfolgt, wobei ein Ergebnis der Korrelation ausgegeben wird. Ein Ergebnis der Korrelation kann dann einen verlässlichen Hinweis auf einen sich anbahnenden Schaden des Drehgebers geben. Folglich kann auch die Datenbank Korrelationswerte enthalten, die mit aktuell ermittelten Korrelationsergebnissen verglichen werden.

Besonders vorteilhaft ist es, wenn eine Korrelation der Datensätze für Daten gleicher Frequenzwerte und Drehgeberpositionen erfolgt. Nach dem zumindest zwei Datensätze aus den gewonnenen Drehgebersignalen erzeugt wurden, können diese Datensätze korreliert werden, so dass Daten übereinstimmender bzw. gleicher Drehgeberpositionen hinsichtlich möglicher Übereinstimmungen oder Abweichungen mittels Berechnung einer Korrelation vergleichbar werden.

Insofern kann es auch vorteilhaft sein, wenn eine Auswahl eines zu analysierenden Frequenzwertebereiches der Datensätze erfolgt, wobei die Korrelation der Datensätze für Daten gleicher Frequenzwerte und Drehgeberpositionen im ausgewählten Frequenzwertebereich erfolgt. So wurde festgestellt, dass eine erhöhte Korrelation in einem bestimmten Frequenzwertebereich ein verlässliches Anzeichen für einen absehbaren Schaden des Drehgebers ist. Für eine Analyse kann beispielsweise ein Frequenzwertebereich ausgewählt werden, in dem sich bauteilrelevante Schäden des Drehgebers abzeichnen. So wird es mit dem Verfahren möglich, beispielsweise gezielt Schädigungen eines Lagers zu erkennen, ohne dass andere Einflussfaktoren, wie beispielsweise durch eine Kupplung verursachte Schwingungen, ein Analyseergebnis beeinflussen. Auch können erhöhte Korrelationen innerhalb eines untersuchten Frequenzwertebereiches eindeutig Drehschwingungen zugeordnet werden, welche zum Beispiel durch nicht schadensrelevante Bauteile oder Anbaufehler des Drehgebers verursacht werden. Weiter ist das Verfahren effizienter durchführbar, da nicht der gesamte Frequenzwertebereich, der überprüfbar wäre, im Rahmen des Verfahrens verarbeitet werden muss.

Auch kann aus dem Korrelationsergebnis eine Stärke einer Schädigung abgeleitet werden. Ein hohes Korrelationsergebnis kann eine starke Schädigung und ein niedriges Korrelationsergebnis kann eine schwache Schädigung signalisieren. Dadurch können ein Ausmaß einer Schädigung sowie ein Eintrittszeitpunkt eines Schadens besonders verlässlich bestimmt werden.

Um eine verbesserte Vergleichbarkeit von Korrelationsergebnissen zu ermöglichen, kann als ein Korrelationsergebnis ein Korrelationskoeffizient berechnet werden. Der Korrelationskoeffizient kann beispielsweise als Korrelationsergebnis in einem Wertebereich von 0 bis 100% dargestellt werden.

Auch können die Datensätze Bilddatensätze sein, wobei dann die Bilddatensätze Bilddaten enthalten. Dabei ist es insbesondere nicht notwendig, dass bei der Durchführung des Verfahrens ein Bild dargestellt wird. Vielmehr fallen die Bilddaten im Rahmen des Verfahrens als ein Ergebnis eines Verfahrensschritts an und können zur bildhaften Darstellung verwendet werden.

Vorteilhaft kann die Transformation der Drehgebersignale mittels Fourier-Transformation oder Wavelet-Transformation erfolgen. Die Fourier-Transformation und Wavelet-Transformation sind mathematische Verfahren, welche zur Signalanalyse besonders gut geeignet sind. Insbesondere die Wavelet-Transformation ermöglicht eine Transformation von Signalen in Bilddatensätze.

In einer vorteilhaften Ausführungsform des Verfahrens kann bei Erreichen eines definierten Grenzwertes eines Korrelationsergebnisses eine Schädigungsmeldung ausgegeben werden. So kann mittels des Verfahrens signalisiert werden, dass beispielsweise ein Austausch des Drehgebers durch einen bevorstehenden Schaden notwendig ist, sowie eine Art eines zu erwartenden Schadens oder ein zu erwartender Eintrittszeitpunkt eines möglichen Schadens. Der definierte Grenzwert kann dabei beliebig ausgewählt werden, je nachdem mit welcher Wahrscheinlichkeit ein bevorstehender Schaden detektiert werden soll.

Auch kann ein Signalversatz der Drehgebersignale durch Vergleich von Drehgebersignalen gleicher Drehgeberpositionen analysiert werden, wobei aus dem Signalversatz eine Drehschwingung bestimmt werden kann. Die Drehschwingung bzw. Drehschwebung kann dann im Rahmen des Verfahrens ausgegeben werden und ist für weitere Analysezwecke nutzbar.

Um besonders genaue Ergebnisse zu erhalten, können vorteilhaft alle Drehgebersignale einer Umdrehung im Rahmen des Verfahrens berücksichtigt werden. Dies ist grundsätzlich nicht zwingend notwendig, so dass das Verfahren auch beispielsweise mit nur jedem zweiten Signal des Drehgebers ausgeführt werden kann. Auch kann das Verfahren bereits besonders verlässliche Ergebnisse mit nur fünf Umdrehungen des Drehgebers und den daraus gewonnenen Signalen liefern.

Bei dem erfindungsgemäßen Drehgeber zur Durchführung des Verfahrens ist die Datenverarbeitungsanlage im Drehgeber integriert. Dies hat den Vorteil, dass keine weiteren, externen Elektronikmodule zur Durchführung des Verfahrens notwendig sind, und dass der Drehgeber selbst den bevorstehenden Ausfall und gegebenenfalls dessen Ursache an seinem Montageort signalisieren kann. Wartungspersonal wird dadurch befähigt, direkt vor Ort über einen Austausch eines Drehgebers zu entscheiden.

Weitere vorteilhafte Ausführungsformen eines Drehgebers ergeben sich aus den Merkmalsbeschreibungen der auf den Verfahrensanspruch 1 rückbezogenen Unteransprüche.

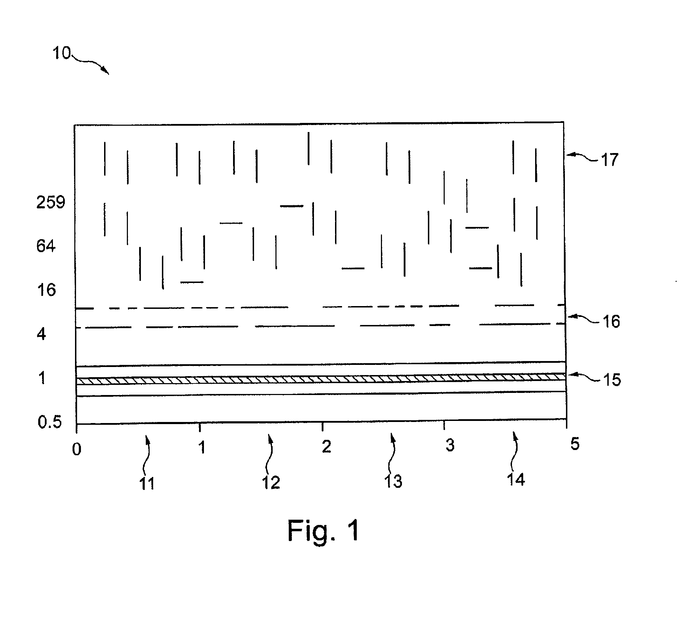

Im Folgenden wird die Erfindung unter Bezugnahme auf die beigefügte Zeichnung näher erläutert.

Die Figur zeigt eine beispielhafte Darstellung von Bilddaten 10, wie sie aus einer Transformation von Drehgebersignalen gewinnbar sind. Hierbei ist zu beachten, dass das erfindungsgemäße Verfahren keine Darstellung der Bilddaten erfordert und die hier gezeigte Figur lediglich der verbesserten Veranschaulichung des Erfindungsgedankens dienen soll.

Auf der Abszisse sind die jeweiligen Umdrehungen eines Drehgebers abgetragen, wobei ein zwischen Zahlen befindlicher Abschnitt jeweils einen Bilddatensatz repräsentiert, so dass in der Figur Bilddatensätze 11 bis 14 dargestellt sind. Auf der Ordinate ist ein Frequenzwertebereich als ein Vielfaches einer drehzahlabhängigen Grundfrequenz abgetragen. Die Zahl 1 repräsentiert im vorliegenden Fall die Grundfrequenz, was sich in den Bilddaten 10 als ein durchgängiges Linienspektrum 15 widerspiegelt. Das Linienspektrum 15 sowie alle anderen, in der Figur erkennbaren Muster und Unregelmäßigkeiten werden aus einer Höhe einer Amplitude eines jeweils zugehörigen Frequenzwertes bestimmt. Im vorgestellten Beispiel sind hohe Amplitudenwerte dunkel und niedrige Amplitudenwerte hell dargestellt. Insbesondere bei einem vierfachen der Grundfrequenz sind horizontale Muster 16 ersichtlich, deren Ursache eine Kupplung des Drehgebers ist. Im Frequenzwertebereich zwischen dem 8 bis 50-fachen der Grundfrequenz können unter anderem Anbaufehler und andere äußere Einflüsse sowie einige Arten von Schäden eingeordnet werden. Im Frequenzwertebereich zwischen dem 50 bis 500-fachen der Grundfrequenz sind alleine Schäden bzw. Schädigungen und ein Rauschen einzuordnen. Ein hier ersichtliches vertikales Muster 17 lässt zunächst keine visuellen Rückschlüsse zu, so dass eine Korrelation der Bilddatensätze 11 bis 14 eine Aussage über wiederkehrende Muster für die jeweiligen Umdrehungen des Drehgebers innerhalb einer analysierten Frequenz ermöglicht.

## Patentansprüche

1. Verfahren zur Überwachung von Drehgebern, wobei das Verfahren mittels eines Drehgebers und einer Datenverarbeitungsanlage ausgeführt wird, wobei Drehgebersignale durch zumindest zwei Umdrehungen des Drehgebers gewonnen werden,
**dadurch gekennzeichnet,**
**dass** ein Vergleich der Drehgebersignale gleicher Drehgeberpositionen durchgeführt wird, wobei ein Ergebnis des Vergleichs ausgegeben wird.

2. Verfahren nach Anspruch 1,
**dadurch gekennzeichnet,**
**dass** eine Transformation der Drehgebersignale in zumindest zwei Datensätze erfolgt, wobei ein Vergleich der Datensätze für Daten gleicher Drehgeberpositionen erfolgt.

3. Verfahren nach Anspruch 2,
**dadurch gekennzeichnet,**
**dass** ein Vergleich der Datensätze mit von in einer Datenbank gespeicherten Datensätzen erfolgt.

4. Verfahren nach Anspruch 2 oder 3,
**dadurch gekennzeichnet,**
**dass** aus dem Vergleich eine spezifische Schädigung abgeleitet wird.

5. Verfahren nach einem der Ansprüche 2 bis 4,
**dadurch gekennzeichnet,**
**dass** die Datensätze Daten enthalten, die Frequenzwerte sowie zugehörige Amplitudenwerte innerhalb eines Frequenzwertebereiches für jeweils verschiedene Drehgeberpositionen repräsentieren.

6. Verfahren nach Anspruch 5,
**dadurch gekennzeichnet,**
**dass** aus einer Größe eines Amplitudenwertes eines jeweiligen Frequenzwertes eine spezifische Schädigung abgeleitet wird.

7. Verfahren nach Anspruch 5 oder 6,
**dadurch gekennzeichnet,**
**dass** die Frequenzwerte jeweils als ein Vielfaches einer drehzahlabhängigen Grundfrequenz bestimmt werden.

8. Verfahren nach einem der Ansprüche 2 bis 7,
**dadurch gekennzeichnet,**
**dass** eine Korrelation der Datensätze erfolgt, wobei ein Ergebnis der Korrelation ausgegeben wird.

9. Verfahren nach Anspruch 8,
**dadurch gekennzeichnet,**
**dass** die Korrelation der Datensätze für Daten gleicher Frequenzwerte und Drehgeberpositionen erfolgt.

10. Verfahren nach Anspruch 8 oder 9,
**dadurch gekennzeichnet,**
**dass** eine Auswahl eines zu analysierenden Frequenzwertebereiches der Datensätze erfolgt, wobei die Korrelation der Datensätze für Daten gleicher Frequenzwerte und Drehgeberpositionen im ausgewählten Frequenzwertebereich erfolgt.

11. Verfahren nach einem der Ansprüche 8 bis 10,
**dadurch gekennzeichnet,**
**dass** aus dem Korrelationsergebnis eine Stärke einer Schädigung abgeleitet wird.

12. Verfahren nach einem der Ansprüche 8 bis 11,
**dadurch gekennzeichnet,**
**dass** als ein Korrelationsergebnis ein Korrelationskoeffizient berechnet wird.

13. Verfahren nach einem der Ansprüche 2 bis 12,
**dadurch gekennzeichnet,**
**dass** die Datensätze Bilddatensätze (11, 12, 13, 14) sind, wobei die Bilddatensätze Bilddaten (10) enthalten.

14. Verfahren nach einem der Ansprüche 2 bis 13,
**dadurch gekennzeichnet,**
**dass** die Transformation mittels Fourier-Transformation oder Wavelet-Transformation erfolgt.

15. Verfahren nach einem der vorangehenden Ansprüche,
**dadurch gekennzeichnet,**
**dass** bei Erreichen eines definierten Grenzwertes eines Vergleichsergebnisses oder Korrelationsergebnisses eine Schädigungsmeldung ausgegeben wird.

16. Verfahren nach einem der vorangehenden Ansprüche,
**dadurch gekennzeichnet,**
**dass** ein Signalversatz der Drehgebersignale durch Vergleich von Drehgebersignalen gleicher Drehgeberpositionen analysiert wird, wobei aus dem Signalversatz eine Drehschwingung bestimmt wird.

17. Drehgeber zur Durchführung des Verfahrens nach einem der vorangehenden Ansprüche,
**dadurch gekennzeichnet,**
**dass** die Datenverarbeitungsanlage im Drehgeber integriert ist.
